**Europäisches Patentamt**

**European Patent Office**

**Office européen des brevets**

(11) Veröffentlichungsnummer: **0 191 322**
**B1**

(12) **EUROPÄISCHE PATENTSCHRIFT**

(45) Veröffentlichungstag der Patentschrift:
**14.12.88**

(21) Anmeldenummer: **86100753.2**

(22) Anmeldetag: **21.01.86**

(51) Int. Cl.⁴: **G 01 T 1/29**

(54) Anordnung zum Herstellen von Röntgenbildern durch Computer-Radiographie.

(30) Priorität: **04.02.85 DE 3503711**

(43) Veröffentlichungstag der Anmeldung:
**20.08.86 Patentblatt 86/34**

(45) Bekanntmachung des Hinweises auf die Patenterteilung:
**14.12.88 Patentblatt 88/50**

(84) Benannte Vertragsstaaten:
**DE FR**

(56) Entgegenhaltungen:
**FR-A-2 304 321**
**US-A-4 320 296**
**US-A-4 465 939**
**US-A-4 467 365**

(73) Patentinhaber: **Siemens Aktiengesellschaft Berlin und München, Wittelsbacherplatz 2, D-8000 München 2 (DE)**

(72) Erfinder: **Vieth, Michael, Holzschuher- Ring 22, D-8520 Eltersdorf (DE)**

LIBER, STOCKHOLM 1988

## Beschreibung

Die Erfindung bezieht sich auf eine Anordnung zum Herstellen von Röntgenbildern durch Computer-Radiographie mit einer Aufnahmeeinrichtung, die eine Speicherplatte enthält, und einem Bildleser zur Abtastung der photostimulierten Lumineszenz der Speicherplatte zeilenweise mit einem Laser. Nach der Übertragung der Lichtsignale mit Lichtleitern, die jeweils einem Bildpunkt einer Bildzeile zugeordnet sind, erfolgt die Umwandlung der Lichtsignale in einem Detektor in elektrische Signale, denen ein Bildaufbaurechner zugeordnet ist.

Bei der digitalen Computer-Radiographie wird bekanntlich das Bild einer Röntgendurchstrahlung auf einer sogenannten Speicherplatte gespeichert und später von einem Bildleser in digitale elektrische Signale umgewandelt und auf einem Bildschirm sichtbar gemacht. In der Speicherplatte werden die Röntgenstrahlen umgewandelt in elektrische Ladungen. Zu diesem Zweck enthält sie einen Speicherleuchtstoff, der in einem organischen Binder eingegossen und auf einen durchsichtigen Träger, im allgemeinen eine Folie, aufgebracht ist. Der Bildleser wandelt das flächenhafte Muster verschiedener Röntgenintensitäten um in entsprechende elektrische Signale, die über einen Analog-Digital-Wandler einem Bildaufbaurechner IP (image processor) zugeführt werden. Nach erneuter Umwandlung in analoge Signale kann das Bild dem Bildschirm zugeführt werden.

Angeregt durch energiereiche Strahlen, insbesondere einen roten Laser, wird die Speicherplatte abgetastet und die photostimulierte Lumineszenz punktweise nacheinander jeweils mit Hilfe eines Lichtleiters einem gemeinsamen Photomultiplier und einem Verstärker zugeführt. Der Laserstrahl wird mit Hilfe einer Optik auf der Speicherplatte fokussiert und mit Hilfe eines Drehspiegels über die Zeile abgelenkt. Die Speicherplatte wird stufenweise relativ zum Fächer des Laserstrahls verschoben, so daß das gesamte Bild zeilenweise vom Laserstrahl abgetastet wird (Radiology, Bd. 148, Sept. 1983, Seiten 833 bis 838).

In einer weiteren bekannten Anordnung wird die Strahlung einer gemeinsamen Strahlungsquelle für die photostimulierende Lumineszenz mit Hilfe einer Vielzahl von Lichtleitern übertragen und diese Strahlung in der Bildzeile durch ein Lichtschaltarray (LISA, light switching array) mit magnetooptischen Schaltern fortgeschaltet (Journal of Non-Crystalline Solids 47, 2 (1982), Seiten 227 bis 238).

Im Bildleser wird das gespeicherte flächenhafte Bildmuster des Röntgenbildes umgewandelt in eine Folge von elektrischen Signalen. Der Bildleser wirkt somit als Flächentransformator. Die photostimulierte Strahlung kann auf der dem abtastenden Laserstrahl zugewandten Seite "in Reflexion" oder auf der Rückseite der Speicherplatte "in Durchstrahlung" gemessen werden. Das rote Licht des Lasers löst in den einzelnen Bildpunkten des Speicherleuchtstoffs blaues Licht aus. Als Speicherleuchtstoff dient im allgemeinen sogenannter Leuchtphosphor, beispielsweise europiumaktivierte Barium-Fluorid-Verbindungen BaFX:Eu. Dabei sind X geeignete Zusätze, beispielsweise Chlor, Brom oder Jod. Gut geeignet ist die Verwendung von Chlor als Zusatz, weil es sich verhältnismäßig einfach verarbeiten läßt, obwohl seine Leuchtzeit mit etwa 7 μs verhältnismäßig lang ist beispielsweise gegenüber der Leuchtzeit von Brom mit 0,8 μs und Jod mit nur 0,6 μs.

Tritt bei der Abtastung ein Nachleuchten der Bildpunkte ein, dessen Dauer der Scanzeit für einige benachbarte Bildpunkte entspricht, so überlagern sich im Empfänger die Strahlungssignale des augenblicklich angeregten Bildpunkts und das Nachleuchten zuvor angeregter Bildpunkte. Die Abbildung der Strahlungsverteilung wird dadurch verfälscht, Auflösung und Dynamik werden verschlechtert. Wird bei der Abtastung das anregende Laserlicht gestreut, so können zusätzlich zum augenblicklich gemessenen Bildpunkt benachbarte Bildpunkte zur Lumineszenz angeregt werden. Die emittierten Signale aller betroffenen Bildpunkte unterliegen wiederum der Streuung und werden vom gleichen Empfänger aufgenommen und überlagert. Hierdurch werden Auflösung und Dynamik des Strahlungsbildes zusätzlich verschlechtert.

Der Erfindung liegt deshalb die Aufgabe zugrunde, eine Anordnung der eingangs genannten Art dadurch zu verbessern, daß ein ungünstiger Einfluß des Nachleuchtens und gegebenenfalls auch des Streulichtes der Bildpunkte auf die Wiedergabe des gespeicherten Röntgenbildes ausgeschlossen wird.

Diese Aufgabe wird erfindungsgemäß gelöst mit den kennzeichnenden Merkmalen des Anspruchs 1. Das ausgestrahlte Lichtsignal jedes folgenden Bildpunktes innerhalb der Bildzeile wird jeweils von einem anderen Detektor verarbeitet, dessen Signal durch eine nachgeschaltete Elektronik nahezu beliebig abgefragt werden kann. Damit ist entweder der Einfluß des Nachleuchtens oder der Einfluß der Lichtstreuung praktisch ausgeschlossen. Als Detektoren können vorzugsweise Photomultiplier vorgesehen sein. Jedem Detektor wird zweckmäßig ein Spitzenwerthalter (sample and hold) zugeordnet; deren Ausgangssignale werden von einem Multiplexer abgefragt.

In einer besonderen Ausführungsform der Anordnung wird auch ein ungünstiger Einfluß sowohl des Streulichtes als auch des Nachleuchtens dadurch vermieden, daß jeweils mehrere aufeinanderfolgende Bildpunkte der Bildzeile eine Gruppe bilden und zur Zuführung des Laserstrahls zu den einzelnen Bildpunkten der Bildzeile eine zusätzliche Anordnung von Lichtleitern vorgesehen ist. Die dem Laserstrahl entgegengerichteten Stirnflächen ihrer ersten Enden bilden eine Abtastzeile und die anderen Enden sind jeweils mit einem Bildpunkt einer anderen Gruppe verbunden. Der Laserstrahl wird somit jeweils nacheinander Bildpunkten der Bildzeile zugeführt, die nicht einander benachbart sind und die jeweils vom Streulicht des vorhergehenden Lichtpunktes nicht erreicht werden.

Es ist auch möglich, die zusätzliche Lichtleiteranordnung auf der Abtastseite mit der Laser-Strahlungsquelle zu ersetzen durch eine Zeile von elektrisch nahezu trägheitslos ansteuerbaren Strahlungsquellen, in der jedem Bildpunkt eine eigene Strahlungsquelle zugeordnet ist. Auf der Ausleseseite ist dann jedem Bildpunkt der Bildzeile ein eigener Detektor zugeordnet. Die Auslesung der Bildzeile erfolgt dann nach dem Muster der Ansteuerung der Strahlungsquellen auf der Abtastseite.

Zur weiteren Erläuterung der Erfindung wird auf die Zeichnung Bezug genommen, in deren Figur 1 eine Anordnung zum Herstellen von Röntgenbildern durch Computer-Radiographie nach dem Stand der Technik dargestellt ist. In den Figuren 2 und 3 ist jeweils eine Ausführungsform nach der Erfindung mit Lichtleitern schematisch veranschaulicht. Die Figuren 4 bis 9 zeigen die Signalbildung in einem Zeitdiagramm.

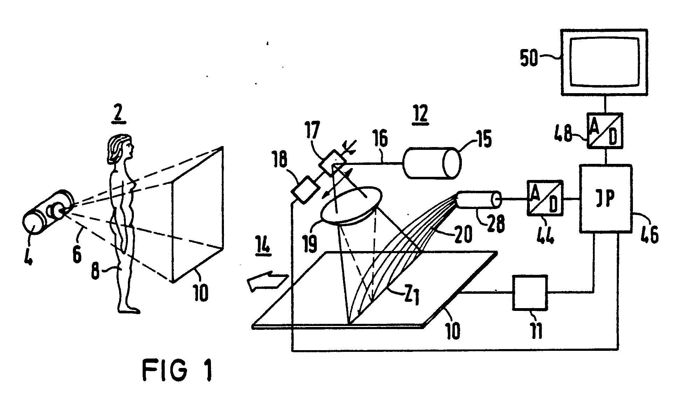

In der bekannten Ausführungsform eines Computer-Radiographen nach Figur 1 besteht die Anordnung im wesentlichen aus einer Aufnahmeeinrichtung 2 und einer Wiedergabeeinrichtung 12. Die Aufnahmeeinrichtung 2 enthält eine Röntgenstrahlungsquelle 4, deren Röntgenstrahlen 6 ein Untersuchungsobjekt, beispielsweise einen menschlichen Körper 8, durchsetzen, und eine sogenannte Speicherplatte 10. Sie besteht im wesentlichen aus einer durchsichtigen Folie, die auf einer Flachseite mit einem photostimulierbaren Leuchtstoff bedeckt ist, der im allgemeinen aus Leuchtphosphor besteht, der in einen organischen Binder eingekleidet ist. Die Speicherplatte 10 erhält das Durchstrahlungsbild des Körpers 8, das mit der Wiedergabeeinrichtung 12 auf einem Bildschirm 50 sichtbar gemacht oder auch von einem in der Figur nicht dargestellten Drucker ausgedruckt werden kann.

Zur Auslese des gespeicherten Bildes wird die Speicherplatte 10 in die Wiedergabeeinrichtung 12 eingesetzt, die eine Abtasteinrichtung 14 mit einer Laser-Strahlungsquelle 15 und einer Ablenkeinrichtung, beispielsweise einen Drehspiegel 17 mit einem Antrieb 18, für den Laserstrahl 16 enthält. Der Laserstrahl 16 kann mit Hilfe einer als Fokussierungslinse 19 dargestellten Optik auf einen Punkt einer Bildzeile $Z_1$ der Speicherplatte 10 fokussiert und mit Hilfe des Drehspiegels 17 punktweise über die Länge der Bildzeile $Z_1$ abgelenkt werden. Die Zuordnung der einzelnen elektrischen Signale zu den Bildpunkten der Bildzeile $Z_1$ erhält man durch eine entsprechende Kopplung eines Bildaufbaurechners 46 sowohl mit dem Antrieb 18 des Drehspiegels 17 als auch mit einem Antrieb 11 für die Bewegung der Speicherplatte 10, die durch einen in der Figur nicht näher bezeichneten Pfeil angedeutet ist.

Die rote Laserstrahlung 16 löst in den Bildpunkten der Bildzeile $Z_1$ eine blaue Lumineszenzstrahlung aus, die mit Hilfe von Lichtleitern 20 einem Photomultiplier 28 zugeführt und in elektrische Signale umgewandelt werden. Diese elektrischen Signale werden über einen Analog-Digital-Wandler 44 einem Computer zugeführt, der als Bildprozessor (image processor, IP) 46 ausgeführt ist und den Bildaufbau übernimmt. Das Bild kann nach Umwandlung der Signale in einem Digital-Analog-Wandler 48 auf dem Bildschirm 50 sichtbar gemacht werden. Während der Auslese der einzelnen Bildpunkte der Bildzeile $Z_1$ ist die Geschwindigkeit der Strahlablenkung durch den Drehspiegel 17 und damit die Auslesezeit für das gesamte Strahlungsbild dadurch begrenzt, daß das Signal eines folgenden Bildpunktes immer erst dann abgerufen werden kann, wenn das Nachleuchten des vorhergehenden Bildpunktes beendet ist.

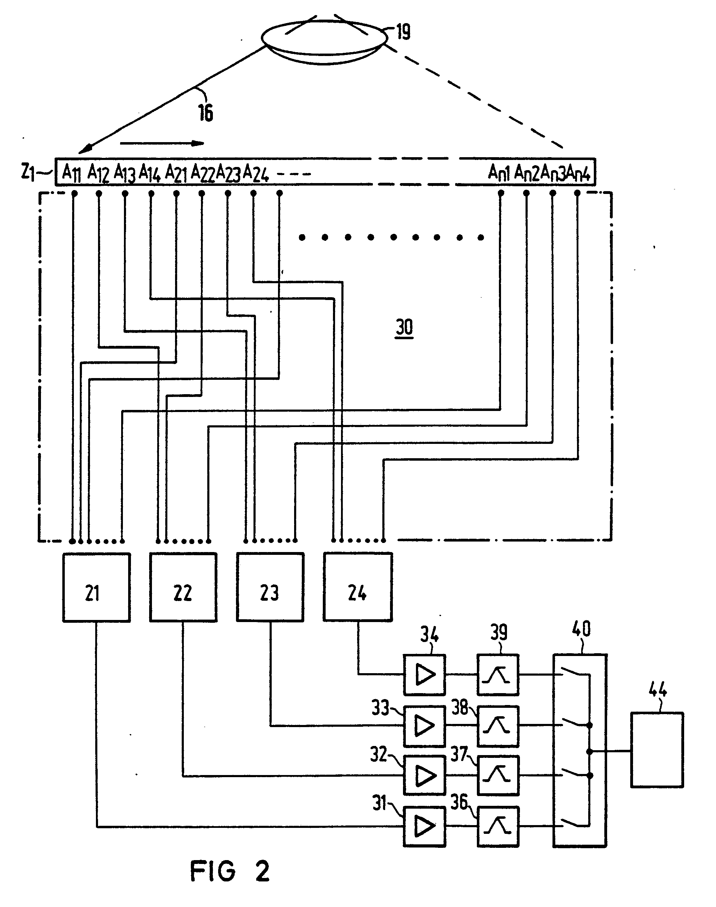

In der Ausführungsform einer Anordnung zum Herstellen von Röntgenbildern durch Computer-Radiographie nach der Erfindung, wie sie in Figur 2 veranschaulicht ist, werden zwar auch die in den einzelnen Bildpunkten der Bildzeile $Z_1$ ausgelösten Lichtsignale jeweils von einem Lichtleiter abgenommen, die in der Figur mit 30 bezeichnet sind, es sind jedoch mehrere großflächige Photodetektoren 21 bis 24 vorgesehen, denen die getrennten Lichtsignale zugeführt werden. Die Bildpunkte der Bildzeile $Z_1$ sind jeweils in Gruppen benachbarter Bildpunkte aufgeteilt, von denen in der Figur am Anfang der Bildzeile $Z_1$ zwei Gruppen dargestellt und mit $A_{11}$, $A_{12}$, $A_{13}$, $A_{14}$ sowie mit $A_{21}$, $A_{22}$, $A_{23}$ und $A_{24}$ bezeichnet sind. Die Bildzeile kann vorzugsweise eine große Anzahl von Bildpunkten, beispielsweise 1000 Bildpunkte, enthalten, von denen die letzte Gruppe mit $A_{n1}$, $A_{n2}$, $A_{n3}$ und $A_{n4}$ bezeichnet ist. Das im Bildpunkt $A_{11}$ ausgelöste Lichtsignal wird über den zugeordneten Lichtleiter 30 dem Detektor 21 zugeführt. Das im folgenden Bildpunkt $A_{12}$ ausgelöste Lichtsignal erhält der Detektor 22 und das Lichtsignal vom Bildpunkt $A_{13}$ erhält der Detektor 23 und in gleicher Weise erhält der Detektor 24 das im Bildpunkt $A_{24}$ ausgelöste Lichtsignal. Zur Verstärkung der abgegebenen Signale von den Detektoren können zweckmäßig zusätzliche Verstärker 31 bis 34 vorgesehen sein, denen jeweils ein elektronischer Spitzenwerthalter 36 bis 39 nachgeschaltet ist, die unter der Bezeichnung "Sample and Hold" bekannt sind. Die Ausgangssignale der Detektoren 21 bis 24 werden jeweils nacheinander über die elektronischen Bauelemente von einem Multiplexer 40 abgerufen und dem Analog-Digital-Wandler 44 zugeführt. In dieser Ausführungsform kann der Laserstrahl 16 über die Fokussierungslinse 19 beispielsweise vom Bildpunkt $A_{11}$ zum folgenden Bildpunkt $A_{12}$ geführt werden, bevor das Nachleuchten des Bildpunktes $A_{11}$ beendet ist. Hierzu fragt der Multiplexer 40 über den Ausgang des Spitzenwerthalters 37 den Detektor 22 ab, bevor das Nachleuchten des Bildpunktes $A_{11}$ beendet ist. Die Fortschaltungszeit des Laserstrahls 16 über die Bildpunkte $A_{11}$ bis $A_{n4}$ der Bildzeile $Z_1$ und damit die Auslesezeit der Speicherplatte 10 wird somit entsprechend vermindert.

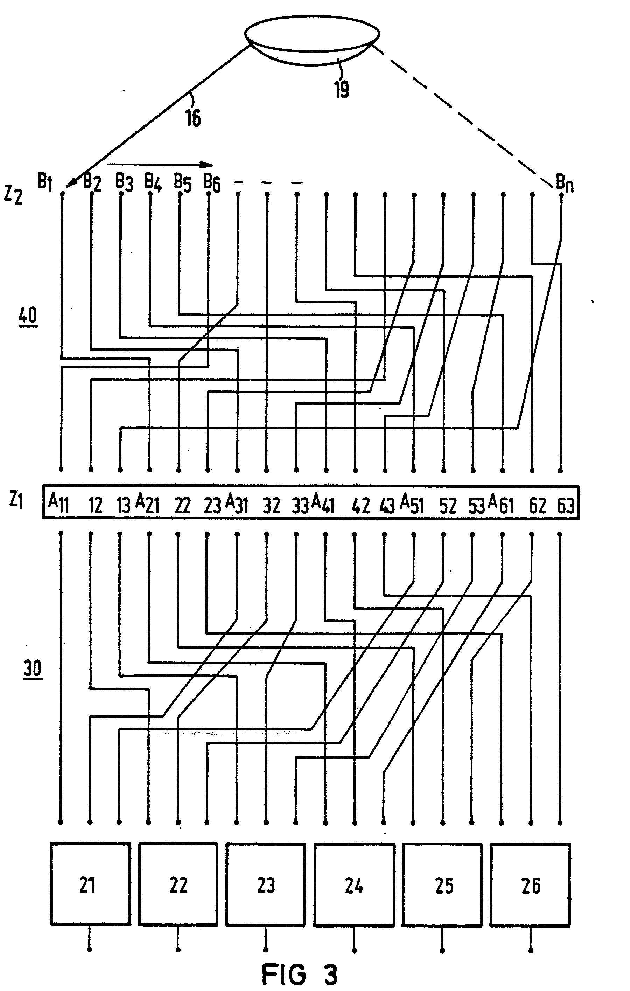

In der Ausführungsform nach Figur 3 sind der Bildzeile $Z_1$ sechs Detektoren 21 bis 26 zugeordnet. Die Bildpunkte der Bildzeile $Z_1$ sind in Gruppen zu jeweils drei Bildpunkten geordnet, von denen die erste Gruppe mit $A_{11}$, $A_{12}$ und $A_{13}$ und die zweite Gruppe mit $A_{21}$, $A_{22}$, $A_{23}$ bezeichnet ist und die letzte die Bezeichnung $A_{61}$, $A_{62}$ und $A_{63}$ trägt. Die Bildpunkte der ersten Gruppe $A_{11}$, $A_{12}$ und $A_{13}$ sind mit den ersten drei Detektoren 21 bzw. 22 bzw. 23 verbunden. In gleicher Weise sind die Bildpunkte der zweiten Gruppe $A_{21}$, $A_{22}$ und $A_{23}$ mit den weiteren Detektoren 24 bzw. 25 bzw. 26 verbunden. Die Bildpunkte der dritten Gruppe $A_{31}$ bis $A_{33}$ sind wieder mit den ersten Detektoren 21, 22 und 23 und die Bildpunkte der vierten Gruppe $A_{41}$ bis $A_{43}$ sind wieder mit den weiteren Detektoren verbunden. In entsprechender Weise kann noch das Lichtsignal einer nahezu beliebigen Anzahl von Bildpunkten jeweils einem der Detektoren 21 bis 26 zugeführt werden.

In dieser besonderen Ausführungsform einer Anordnung zum Herstellen von Röntgenbildern durch Computer-Radiographie kann zusätzlich noch der Einfluß des Streulichtes der Bildpunkte der Bildzeile $Z_1$ dadurch ausgeschlossen werden, daß auch während der Abtastung der Bildzeile $Z_1$ mit dem Laserstrahl 16 über die Optik 19 das Laserlicht jeweils nacheinander Bildpunkten der Bildzeile $Z_1$ zugeführt wird, die nicht aufeinanderfolgen, sondern jeweils abwechselnd einer folgenden Gruppe zugeordnet sind. Zu diesem Zweck ist auf der Abtastseite eine zusätzliche Lichtleiteranordnung 40 vorgesehen, deren eines Ende dem Laserstrahl 16 entgegengerichtet ist. Diese Enden sind mit $B_1$ bis $B_n$ bezeichnet und bilden durch eine lineare Anordnung beispielsweise mit gleichen Abständen eine Abtastzeile $Z_2$. Das andere Ende dieser Lichtleiter ist jeweils mit einem Bildpunkt einer der Gruppen der Bildzeile $Z_1$ verbunden. Vom Ende $B_1$ wird somit das stimulierende Licht des Laserstrahls 16 zum Bildpunkt $A_{21}$ der Bildzeile $Z_1$ geführt. In gleicher Weise gelangt das rote Licht des Laserstrahls 16 vom benachbarten Ende $B_2$ der Abtastzeile zum Bildpunkt $A_{31}$ der folgenden Gruppe in der Bildzeile $Z_1$. Das Licht des Laserstrahls 16 gelangt vom Ende $B_3$ des dritten Lichtleiters zum Bildpunkt $A_{41}$ der folgenden Gruppe der Bildpunkte in der Bildzeile $Z_1$. In gleicher Weise wird das Laserlicht des Laserstrahls 16 von den

Enden $B_4$ und $B_5$ der Abtastzeile $Z_2$ zu den Bildpunkten $A_{51}$ bzw. $A_{61}$ geführt. Vom Ende $B_6$ der Abtastzeile $Z_2$ wird das Laserlicht des Laserstrahls 16 zum Bildpunkt $A_{11}$ der Bildzeile $Z_1$ geführt. Das Abtastsignal des Laserstrahls 16 gelangt somit jeweils nacheinander zu Bildpunkten der Bildzeile $Z_1$, die um einige Bildpunkte voneinander entfernt ist und deren Anzahl durch die Gruppe bestimmt wird. Das Streulicht eines Bildpunktes, beispielsweise des Bildpunktes $A_{21}$, kann sich somit nicht auf ein Detektorsignal auswirken, das den benachbarten Bildpunkten, beispielsweise $A_{13}$ und $A_{22}$ sowie $A_{12}$ und $A_{23}$, entnommen wird.

In einer besonders vorteilhaften Ausführungsform der dargestellten Anordnung beginnt die Zuführung der Abtaststrahlung zum Ende $B_1$ in der Abtastzeile $Z_2$ nicht mit dem ersten Bildpunkt der Bildzeile $Z_1$, sondern erst mit dem Bildpunkt $A_{21}$ der zweiten Gruppe der Bildpunkte. Anschließend werden die Bildpunkte $A_{31}$, $A_{41}$, $A_{51}$, $A_{61}$, $A_{11}$ vom anregenden Laserlicht getroffen und das emittierte Lumineszenzlicht durch die Anordnung 30 abwechselnd zu den Detektoren 21 und 24 übertragen, während das Streulicht zu den Detektoren 22, 23, 25, 26 geleitet wird. Durch diese bevorzugte Ausführungsform der Anordnung der Punkte werden die beiden im Randbereich der Zeile $Z_1$ liegenden Punkte $A_{61}$ und $A_{11}$ zuletzt angeregt. Diese Punkte haben eine geringere Zahl von Nachbarpunkten, die vom Streulicht erreicht werden können. Dadurch werden die Detektoren 22 und 25 nicht mehr vom Streulicht belegt, so daß diese Detektoren ohne Verzögerung durch das Nachleuchten des Streulichts anschließend die emittierte Lumineszenzstrahlung der Bildpunkte $A_{22}$, $A_{32}$, $A_{42}$, $A_{52}$, $A_{62}$, $A_{12}$ abwechselnd aufnehmen können, während das Streulicht dieser Punkte zu den Detektoren 21, 23, 24, 26 geleitet wird. In gleicher Weise wird schließlich die emittierte Lumineszenzstrahlung der Bildpunkte $A_{23}$, $A_{33}$, $A_{43}$, $A_{53}$, $A_{63}$, $A_{13}$ abwechselnd zu den Detektoren 23 und 26 geleitet, während das Streulicht auf die Detektoren 21, 22, 24, 25 fällt.

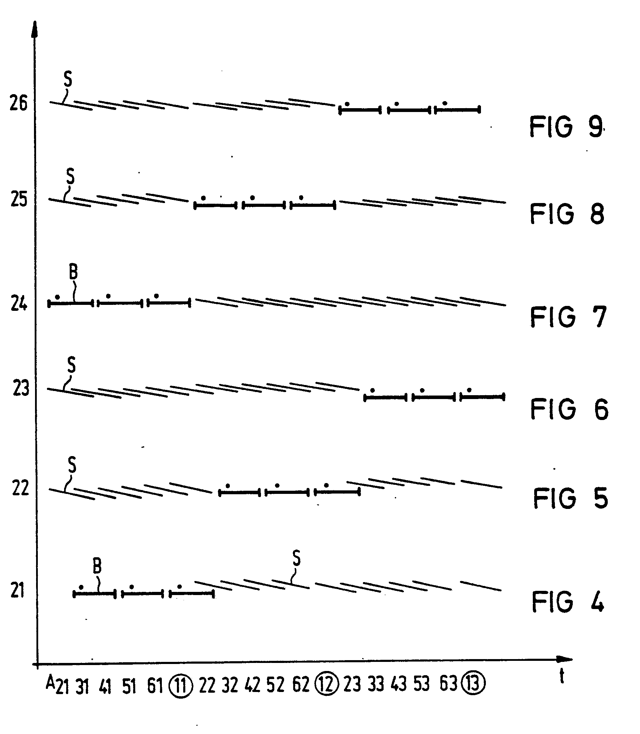

Im Zeitdiagramm der Figuren 4 bis 9 sind die Bildpunktsignale B und die Streulichtsignale S der einzelnen Bildpunkte der Bildzeile $Z_1$ in ihrer zeitlichen Reihenfolge aufgetragen, wie sie jeweils einem der Detektoren 21 bis 26 zugeführt werden. Die Bildpunktsignale B sind jeweils fett ausgezogen, während die Streulichtsignale S durch dünne Striche angedeutet sind. Die Strichlänge entspricht jeweils der Nachleuchtdauer. Gemäß dem Diagramm erhält beispielsweise zunächst der Detektor 24 sein Bildpunktsignal B vom Bildpunkt $A_{21}$ der Bildzeile $Z_1$, das vom Laserstrahl über das Ende $B_1$ der Abtastzeile $Z_2$ über den Lichtleiter der Lichtleiteranordnung 40 vorgegeben ist. Zugleich erhalten die Detektoren 23 und 25 ein Streulichtsignal von den Bildpunkten $A_{13}$ und $A_{22}$ und die Detektoren 22 und 26 ein Streulicht von den Detektoren 12 bzw. 23. Dieses Streulicht S kann jedoch keinen Einfluß auf das gebildete elektrische Signal haben, weil nur der Detektor 24 abgefragt wird. Anschließend wird der Detektor 21 abgefragt, der sein Bildpunktsignal B vom Bildpunkt $A_{31}$ der Bildzeile $Z_1$ erhält, während die Detektoren 22, 23 sowie 25 und 26 das Streulicht S der benachbarten Bildpunkte erhalten. Auch das Nachleuchten des Bildpunktes $A_{21}$ während dieser Zeit hat keinen Einfluß auf das gebildete elektrische Signal, da der Detektor 24 während dieser Zeit nicht abgefragt wird. Die Abfrage ist jeweils als Punkt über dem ausgezogenen Bildpunktsignal angedeutet. Das folgende Bildpunktsignal B liefert der Bildpunkt $A_{41}$, der seine Anregung vom Ende $B_3$ der Abtastzeile $Z_2$ erhalten hat, an den Detektor 24. Während des Nachleuchtens dieses Signals wird bereits wieder der Detektor 21 abgefragt, der sein Bildpunktsignal B vom Bildpunkt 51 erhalten hat, der vom Ende $B_4$ der Abtastzeile 2 angeregt worden ist. Das folgende Signal liefert der Bildpunkt 61 wieder an den Detektor 24 und dann liefert der Bildpunkt $A_{11}$ sein Signal an den Detektor 21. Das folgende Bildpunktsignal B erhält Detektor 25 vom Bildpunkt $A_{22}$, der mehrfach abwechselnd mit dem Detektor 22 sein Signal erhält. In gleicher Weise werden die Bildpunktsignale B auch an die Detektoren 23 und 26 in seitlicher Reihenfolge geliefert. Es erfolgt somit die Abfrage der einzelnen Detektoren 21 bis 26 jeweils unabhängig sowohl vom Nachleuchten der Bildpunkte $A_{11}$ bis $A_{63}$ der Bildzeile $Z_1$ als auch vom Streulicht der einzelnen Bildpunkte.

Da die Reihenfolge der eingelesenen Bildpunkte nicht mehr ihrer ursprünglichen Anordnung in der Zeile $Z_1$ entspricht, kann für eine anschließende Bildverarbeitung im Rechner eine Umordnung der Meßwerte im Speicher des Rechners vorgenommen werden.

In einer besonders vorteilhaften Ausführungsform der Anordnung zum Herstellen von Röntgenbildern kann die erste Anordnung von Lichtleitern 30 auch durch eine Arrayanordnung von lichtempfindlichen Detektoren ersetzt werden, deren einzelne Detektoren die Größe der zu registrierenden Bildpunkte der Bildzeile $Z_1$ haben und bei der entsprechend der Ausführungsform nach Figur 3 vorbestimmte nicht benachbarte Detektoren elektrisch untereinander verbunden sind und in einer vorbestimmten Reihenfolge abgefragt werden.

Außerdem kann auch die zweite Anordnung von Lichtleitern 40, deren Enden $B_1$ bis $B_n$ die Abtastzeile $Z_2$ bilden, sowie die durch den Laserstrahl 16 gebildete Abtaststrahlung durch eine Zeile von einzelnen, nahezu trägheitslos ansteuerbaren Strahlungsquellen, vorzugsweise lichtemittierenden Dioden, insbesondere Lumineszenzdioden, eingesetzt werden, so daß jeder der Bildpunkte $A_{11}$ bis $A_{63}$ der Bildzeile $Z_1$ durch eine einzelne Strahlungsquelle angeregt werden kann. Die Reihenfolge der Ansteuerung kann beispielsweise entsprechend der Ausführungsform nach Figur 3 erfolgen.

## Patentansprüche

1. Anordnung zum Herstellen von Röntgenbildern durch Computer-Radiographie mit einer Aufnahmeeinrichtung (2), die eine Speicherplatte (10) enthält, und einer Wiedergabeeinrichtung (12) mit einem Bildleser (14) zur Abtastung der photostimulierten Lumineszenz der Speicherplatte (10) zeilenweise mit einem Laser (16) und Übertragung der Lichtsignale mit Lichtleitern (30, 40), die jeweils einem Bildpunkt ($A_{11}$ bis $A_{n4}$ sowie $A_{11}$ bis $A_{63}$) einer Bildzeile ($Z_1$) zugeordnet sind und Umwandlung der Lichtsignale in einem Detektor ($A_{21}$ bis $A_{26}$) in elektrische Signale, denen ein Bildaufbaurechner (46) zugeordnet ist, dadurch gekennzeichnet, daß mehrere Detektoren (21 bis 24) vorgesehen sind, denen jeweils mehrere Bildpunkte ($A_{11}$, $A_{21}$, $A_{31}$.. $A_{n1}$) einer Bildzeile ($Z_1$) derart zugeordnet sind, daß die aufeinanderfolgenden Bildpunkte (z. B. $A_{11}$ bis $A_{14}$; $A_{21}$ bis $A_{24}$) jeweils über einen Lichtleiter einer ersten Anordnung von Lichtleitern (30) mit verschiedenen Detektoren (21 bis 24) verbunden sind.

2. Anordnung nach Anspruch 1, dadurch gekennzeichnet, daß als Detektoren (21 bis 24) Photomultiplier vorgesehen sind.

3. Anordnung nach Anspruch 1, dadurch gekennzeichnet, daß als Detektoren (21 bis 24) Photodioden vorgesehen sind.

4. Anordnung nach Anspruch 1 oder 2 oder 3, dadurch gekennzeichnet, daß jedem Detektor (21 bis 24) ein Spitzenwerthalter (36 bis 39) nachgeschaltet ist.

5. Anordnung nach einem der Ansprüche 1 bis 4, dadurch gekennzeichnet, daß Gruppen von Detektoren (21 bis 23 und 24 bis 26) vorgesehen sind und daß jeweils mehrere aufeinanderfolgende Bildpunkte (z. B. $A_{11}$ bis $A_{13}$ sowie $A_{21}$ bis $A_{23}$) der Bildzeile ($Z_1$) eine Gruppe bilden und daß zur Zuführung des Laserstrahls (16) zu den einzelnen Bildpunkten ($A_{11}$ bis $A_{63}$) der Bildzeile ($Z_1$) eine zusätzliche Anordnung (40) von Lichtleitern vorgesehen ist und daß die dem Laserstrahl (16) entgegengerichteten Stirnflächen der ersten Enden dieser Lichtleiter eine Abtastzeile ($Z_2$) bilden und daß die anderen Enden der in der Abtastzeile ($Z_2$) benachbarten Lichtleiter jeweils einen Bildpunkt einer anderen Gruppe zugeordnet sind.

6. Anordnung zum Herstellen von Röntgenbildern durch Computer-Radiographie mit einer Aufnahmeeinrichtung (2), die eine Speicherplatte (10) enthält, und einer Wiedergabeeinrichtung (12) mit einem Bildleser (14) zur Auslese der photostimulierten Lumineszenz der Speicherplatte (10) in den Bildpunkten ($A_{11}$ bis $A_{63}$) von Bildzeilen ($Z_1$), dadurch gekennzeichnet, daß den Bildpunkten ($A_{11}$ bis $A_{63}$) der Bildzeile ($Z_1$) jeweils eine Strahlungsquelle einer Abtastzeile ($Z_2$) zugeordnet ist und daß die Strahlungsquellen nach einem vorbestimmten Muster trägheitslos steuerbar sind und daß die Bildpunkte ($A_{11}$ bis

$A_{63}$) in Gruppen (z. B. $A_{11}$, $A_{31}$, $A_{51}$) geordnet sind, denen jeweils ein gemeinsamer Detektor (21 bis 26) zugeordnet ist.

7. Anordnung nach Anspruch 6, <u>dadurch gekennzeichnet</u>, daß als Strahlungsquellen Lumineszenzdioden vorgesehen sind.

8. Anordnung nach Anspruch 6 oder 7, <u>dadurch gekennzeichnet</u>, daß den Bildpunkten ($A_{11}$ bis $A_{63}$) jeweils ein Detektor zugeordnet ist.

## Claims

1. Arrangement for producing X-ray images by computer radiography with a radiographic device (2) containing a storage plate (10), and a reproduction device (12) with an image reader (14) for the linewise scanning of the photo-stimulated luminescence of the storage plate (10) using a laser (16) and for transferring the light signals with light guides (30, 40), which are associated with respective picture elements ($A_{11}$ to $A_{n4}$ and $A_{11}$ to $A_{63}$) of a picture line ($Z_1$), and for converting the light signals in a detector ($A_{21}$ to $A_{26}$) into electric signals with which a picture building computer (46) is associated, characterised in that several detectors (21 to 24) are provided, with which several respective picture elements ($A_{11}$, $A_{21}$, $A_{31}$...$A_{n1}$) of a picture line ($Z_1$) are associated in such a way that the consecutive picture elements (e.g. $A_{11}$ to $A_{14}$; $A_{21}$ to $A_{24}$) are connected with various detectors (21 to 24) via respective light guides of a first arrangement of light guides (30).

2. Arrangement according to claim 1, characterised in that photo-multipliers are provided as detectors (21 to 24).

3. Arrangement according to claim 1, characterised in that photo-diodes are provided as detectors (21 to 24).

4. Arrangement according to claim 1 or 2 or 3, characterised in that a peak value holder (36 to 39) is connected after each detector (21 to 24).

5. Arrangement according to one of claims 1 to 4, characterised in that groups of detectors (21 to 23 and 24 to 26) are provided, and in that several consecutive picture elements (e.g. $A_{11}$ to $A_{13}$ and $A_{21}$ to $A_{23}$) of the picture line ($Z_1$) form one group in each case, and in that an additional arrangement (40) of light guides is provided to conduct the laser beam (16) to the individual picture elements ($A_{11}$ to $A_{63}$) of the picture line ($Z_1$), and in that the faces of the first ends of these light guides which are directed towards the laser beam (16) form a scan line ($Z_2$), and in that the other ends of the light guides which are adjacent to each other in the scan line ($Z_2$) are associated with respective picture elements of another group.

6. Arrangement for producing X-ray images by computer radiography with a radiographic device (2) containing a storage plate (10), and a reproduction device (12) with an image reader (14) for scanning through the photo-stimulated luminescence of the storage plate (10) in the picture elements ($A_{11}$ to $A_{63}$) of picture lines ($Z_1$), characterised in that a respective radiation source of a scan line ($Z_2$) is associated with the picture elements ($A_{11}$ to $A_{63}$) of the picture line ($Z_1$), and in that the radiation sources can be controlled without inertia according to a predetermined pattern, and in that the picture elements ($A_{11}$, $A_{63}$) are arranged in groups (e.g. $A_{11}$, $A_{31}$, $A_{51}$), with which respective common detectors (21 to 26) are associated.

7. Arrangement according to claim 6, characterised in that luminescence diodes are provided as radiation sources.

8. Arrangement according to claim 6 or 7, characterised in that respective detectors are associated with the picture elements ($A_{11}$ to $A_{63}$).

## Revendications

1. Dispositif pour produire des images radiologiques par radiographie assistée par ordinateur ou radiographie numérisée, comprenant un dispositif de prise d'image (2) qui contient une plaque mémoire (10) et un dispositif de reproduction (12) avec un lecteur d'image (14) pour l'exploration de la luminescence photostimulée de la plaque mémoire (10) ligne par ligne par un laser (16), la transmission des signaux lumineux par des conducteurs de lumière (30, 40) à chacun desquels est coordonné un point d'image ($A_{11}$ à $A_{n4}$, ainsi que $A_{11}$ à $A_{63}$) d'une ligne d'image ($Z_1$) et la transformation des signaux lumineux dans un détecteur ($A_{21}$ à $A_{26}$) en signaux électriques envoyés à un ordinateur de reconstitution d'image (46), caractérisé en ce que plusieurs détecteurs (21 à 24) sont prévus, à chacun desquels plusieurs points d'image ($A_{11}$, $A_{21}$, $A_{31}$... $A_{n1}$) d'une ligne d'image ($Z_1$) sont associés de manière que les points d'image successifs (par exemple $A_{11}$ à $A_{14}$; $A_{21}$ à $A_{24}$) soient reliés chacun par un conducteur de lumière d'un premier dispositif de conducteurs de lumière (30) à plusieurs détecteurs (21 à 24).

2. Dispositif selon la revendication 1, caractérisé en ce que les détecteurs (21 à 24) sont constitués par des photomultiplicateurs.

3. Dispositif selon la revendication 1, caractérisé en ce que les détecteurs (21 à 24) sont constitués par des photodiodes.

4. Dispositif selon la revendication 1, 2 ou 3, caractérisé en ce que chaque détecteur (21 à 24) est suivi par un élément de maintien de la valeur de crête (36 à 39).

5. Dispositif selon une des revendications 1 à 4, caractérisé en ce que des groupes de détecteurs (21 à 23 et 24 à 26) sont prévus, que plusieurs points d'image qui se suivent (par exemple $A_{11}$ à $A_{13}$ ainsi que $A_{21}$ à $A_{23}$) de la ligne d'image ($Z_1$) forment chaque fois un groupe, qu'un dispositif supplémentaire de conducteurs de lumière (40) est prévu pour amener le faisceau laser (16) aux différents points d'image ($A_{11}$ à $A_{63}$) de la ligne d'image ($Z_1$), que les faces d'extrémité dirigées vers le faisceau laser (16) des premières extrémités de ces conducteurs de lumière forment une ligne de balayage ($Z_2$) et que les autres extrémités des conducteurs de lumière voisins dans la ligne de balayage ($Z_2$) sont associées respectivement à un point d'image d'un autre groupe.

6. Dispositif pour produire des images radiologiques par radiographie numérisée, comprenant un dispositif de prise de vue (2), lequel contient une plaque mémoire (10), ainsi qu'un dispositif de reproduction (12) avec un lecteur d'image (14) pour la lecture de la luminescence photostimulée de la plaque mémoire (10) dans les points d'image ($A_{11}$ à $A_{63}$) de lignes d'image ($Z_1$), caractérisé en ce qu'une source de rayonnement d'une ligne de balayage ($Z_2$) est associée à chacun des points d'image ($A_{11}$ à $A_{63}$) de la ligne d'image ($Z_1$), que les sources de rayonnement peuvent être commandées sans retard selon un schéma prédéterminé et que les points d'image ($A_{11}$ à $A_{63}$) sont ordonnés en groupes (comprenant par exemple les points $A_{11}$, $A_{31}$ et $A_{51}$) avec coordination d'un détecteur commun (21 à 26) aux points d'image d'un groupe.

7. Dispositif selon la revendication 6, caractérisé en ce que les sources de rayonnement sont constituées par des diodes électroluminescentes.

8. Dispositif selon la revendication 6 ou 7, caractérisé en ce qu'un détecteur est coordonné à chacun des points d'image ($A_{11}$ à $A_{63}$).

**FIG 1**

FIG 2

FIG 3

FIG 9

FIG 8

FIG 7

FIG 6

FIG 5

FIG 4